# EUROPEAN PATENT APPLICATION

(11) **EP 4 600 067 A1**
(43) Date of publication of application: **13.08.2025**
(21) Application number: 25156937.2
(22) Date of filing: 10.02.2025
(51) Int. Cl.: B60K 35/10, B60R 16/037, B60R 25/24

(54) **KEYED CONTROL CONSOLE FOR AN AGRICULTURAL MACHINE**

(30) Priority: 09.02.2024 US 202463551976 P; 04.02.2025 US 202519045019
(71) Applicant: Raven Industries, Inc., Sioux Falls, SD 57117-5107 (US)
(72) Inventor: GARG, Parag, Sioux Falls, 57117-5107 (US); KOCER, Jared Ernest, Sioux Falls, 57110 (US)
(74) Representative: Pfenning, Meinig & Partner mbB

(57) **Abstract**

Systems and methods for keyed control consoles for agricultural machines or vehicles are provided. Various aspects include a control system configured for guiding an agricultural machine. The control system includes a control console within a cab of the agricultural machine, the control console including a display, one or more input elements, and a wireless communications interface. The control system also includes a wireless device configured to be carried or worn by a user of the agricultural machine. The wireless communications interface is configured to detect the wireless device within a predetermined distance of the agricultural machine, and configured to initiate a startup sequence of the control console upon detecting the wireless device within the predetermined distance.

## Description

### RELATED APPLICATIONS

This application claims the benefit of U.S. Provisional Patent Application Serial No. 63/551,876, filed February 9, 2024, the content of which is incorporated herein by reference in its entirety.

### COPYRIGHT NOTICE

A portion of the disclosure of this patent document contains material that is subject to copyright protection. The copyright owner has no objection to the facsimile reproduction by anyone of the patent document or the patent disclosure, as it appears in the Patent and Trademark Office patent files or records, but otherwise reserves all copyright rights whatsoever. The following notice applies to the software and data as described below and in the drawings that form a part of this document: Copyright Raven Industries, Inc. of Sioux Falls, South Dakota, USA. All Rights Reserved.

### TECHNICAL FIELD

This document pertains generally to agricultural machines or vehicles, and more particularly to systems and methods for keyed control consoles for agricultural machines or vehicles.

### BACKGROUND

Various agricultural operations are performed on fields using agricultural machines or vehicles. These operations may include tillage, fertilizing, planting, spraying, and harvesting. Agricultural machines may include control circuitry to enable, enhance or control various functions related to the agricultural operations. An agricultural machine may include a control console within a cab of the machine to provide for input and output of data to a user of the agricultural machine. The control console may include a display, an input device such as a touchscreen or keyboard, audio input and output, and the like. The control console may be restarted or rebooted prior to use of the agricultural machine, or upon starting of the agricultural machine.

### SUMMARY

Disclosed herein, among other things, are systems and methods for keyed control consoles for agricultural machines or vehicles. Various aspects include a control system configured for guiding an agricultural machine. The control system includes a control console within a cab of the agricultural machine, the control console including a display, one or more input elements, and a wireless communications interface. The control system also includes a wireless device configured to be carried or worn by a user of the agricultural machine. The wireless communications interface is configured to detect the wireless device within a predetermined distance of the agricultural machine, and configured to initiate a startup sequence of the control console upon detecting the wireless device within the predetermined distance.

Various aspects include a method of operating a control console for guiding an agricultural machine. The method includes detecting a wireless device within a predetermined distance of the agricultural machine using a wireless communications interface of the control console. The wireless device is configured to be carried or worn by a user of the agricultural machine. The method further includes initiating a startup sequence of the control console upon detecting the wireless device within the predetermined distance, the control console including a display and one or more input elements.

This overview is intended to provide an overview of subject matter of the present patent application. It is not intended to provide an exclusive or exhaustive explanation of the invention. The detailed description is included to provide further information about the present patent application.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
FIG. 1 is a diagram of an agricultural machine or vehicle.
FIG. 2 is a diagram of an interior of a cab of an agricultural machine or vehicle.
FIG. 3 is a schematic view of one example of a keyed control console for agricultural machines or vehicles.
FIG. 4 illustrates a flow diagram of a method of operating a control console for guiding an agricultural machine or vehicle, according to various examples of the present subject matter.
FIG. 5 illustrates a block diagram of an example machine upon which any one or more of the techniques (e.g., methodologies) discussed herein can perform.

### DETAILED DESCRIPTION

The following detailed description of the present subject matter refers to subject matter in the accompanying drawings which show, by way of illustration, specific aspects and embodiments in which the present subject matter may be practiced. These embodiments are described in sufficient detail to enable those skilled in the art to practice the present subject matter. References to "an", "one", or "various" embodiments in this disclosure are not necessarily to the same embodiment, and such references contemplate more than one embodiment. The following detailed description is demonstrative and not to be taken in a limiting sense. The scope of the present subject matter is defined by the appended claims, along with the full scope of legal equivalents to which such claims are entitled.

Many tractors, combines and self-propelled machines have a control console or display in the cab of the machine that is a central intelligence for the machine. Typically, when a user gets in the machine he has to turn on the display and wait for it to boot up and load all of the control console programs. The present subject matter provides the user with a device, such as a key fob or a badge or the like, to be carried on the user's person or in his pocket. The device includes a wireless communicator, such as a radio frequency identification (RFID), a Bluetooth transmitter, a radio frequency (RF) transmitter, or the like, that would send a signal back to the console when it receives a message from the console. In various embodiments, the console in the cab stays in a low power mode, with a portion of the console powered down with the exception of a wireless circuit used to detect the user's device. Some portions of the console may be powered on and other portions of the console powered off during the low power or sleep mode, in various examples. The portions that are powered on may run off a separate circuit, in some examples. In one example, a Bluetooth low energy (LE) transmitter in the console is powered and sending out a signal to monitor when someone having the device (badge or key fob, for example) enters a predetermined area around the machine. In another example, the device is an RFID tag that may be detected by the console. In some examples, a single pin of a processor of the control console is connected to the wireless circuit. In this example, the console may exit the low power mode upon detection of the user device within a programmable distance (using a signal received from the wireless circuit at the single pin) or upon pressing of a power button on the console.

The control console runs a macro which may include booting up when the device is detected, and thus is ready to go when the user enters and sits in the cab of the machine. The macro may also begin power up of other electronics in the agricultural machine, and is not limited to the control console. For example, the macro may begin to power up an electronic control unit (ECU) or a global positioning sensor (GPS) or any other electronic component of the agricultural machine. In some embodiments, the macro may enable or disable security features of the agricultural machine. In various examples, the user does not need to physically touch any portion of the machine to initiate the macro running on the control console. In some examples, a feedback mechanism is provided to notify the user that the control console has detected the user device within the programmable proximity. For example, the user device may emit a beep or tone or vibration or the like upon sensing a signal from the control console. In one example, the device emits two beeps when the user device enters the predetermined area or distance from the console or machine, to alert the user that the user device has been recognized.

In one embodiment, a timeout mechanism is provided such that, if the user and/or the user's device does not enter the cab within a predetermined time (e.g., five minutes) after being detected within the predetermined distance, the console re-enters the low power mode and continue to monitor for the user's device. In various embodiments, a profile is set up and associate with the user's device, so that the console may execute a specific routine customized for a particular user when that user (or user's device) enters within the predetermined distance or radius from the console, machine, or cab of the machine. The profile may include the console executing a macro to turn the door light of the machine on, turn the cab light on, set the seat to the correct position, program the console to the correct language, and/or start the machine, in various examples. The macro may also begin power up of an ECU, GPS, or any other electronic component of the agricultural machine, in various embodiments, so that these components are ready for operation upon the user entering the cab of the machine.

Thus, the control console in the cab of the machine may be wirelessly linked to a key fob or badge or the like provided to a user. As the user approaches the machine and enters within a programmable or predetermined distance of the machine or cab or console, the present subject matter signals the control console in the cab of the machine to start booting up and be ready with the user/operator gets into the cab. Thus, the present subject matter makes the control console available to the user upon entry, and the user does not have to wait to boot the console after entering the cab. In some embodiments, profiles or macros are associated with the key fob or device that are executed when the device is detected n we could do multiple things when we see the correct coded on the user.

### Agricultural Machine

In an example, an agricultural vehicle (or agricultural machine) is provided for performing a task in a field. The vehicle may be any agricultural vehicle (hereinafter, "vehicle"), including combines, harvesters, planters, sprayers, tractors, trailing vehicles, or the like that traverse a field to perform a task. The tasks include, in various examples, harvesting, planting seeds, spraying crops, applying agricultural product, including but not limited to solid products including granular fertilizer, liquid products including fertilizers, herbicides, or pesticides.

The vehicle includes, in various examples, one or more control systems or vehicle controllers that are configured to guide the vehicle as it performs a task in a field. In an example, the control systems include a path planner that is configured to determine or provide a guidance path for the vehicle. The path planner provides a target heading or guidance line for the vehicle to follow as is traverses a field. In another example, the control systems include a steering controller that is configured to steer one or more axles or wheel (other ground engaging element) pairs of the vehicle to adjust the position or orientation of the vehicle according to a target heading or guidance line provided by the path planner. Although the present disclosure ascribes operations, features, modules, or components, to a particular controller, this is done for ease of discussion and such operations, features, modules, or components are, in various examples, performed by, or is incorporated in, one or more of the controllers or control systems described herein.

The vehicle, in various examples, includes one or more sensors that are configured to measure, or to generate information that is indicative of, characteristics of the vehicle or an implement associated with the vehicle. The sensors include position or orientation sensors that are configured to measure the position or orientation of the vehicle in a field. Such sensors, in various examples, include global positioning systems sensors (GPS), optical sensors such as video or digital cameras, touchless sensors such as sonic and electromagnetic wave sensors, or tactile sensors. These sensors generate measurements or other information that are used by a control system to determine the heading error of the vehicle relative to a crop row or a guidance line. In an example, the sensors generate measurements that are useful for determining the heading error of a point on one or more axles of the vehicle or at any other point on the vehicle (e.g., control reference point). The sensors, in some examples, include behavioral sensors that measure the speed, acceleration, or yaw rate of the vehicle or any point on the vehicle.

The steering controller, in various examples, is configured to steer the vehicle from an off-line position (e.g., a position that the vehicle is not following, or is not on, a guidance line) along, for example, a curved or circular path toward a guidance line or an on-line position (hereinafter, "on-line" or "on-line position"). The steering controller receives a set of vehicle position, orientation, and behavior inputs, as wells as a guidance line parameter. The steering controller uses this information to steer or adjust the angle (e.g., the yaw) of one or more axles of the vehicle to adjust the position or orientation of the vehicle responsive to the guidance line parameter. In an example, the steering controller adjusts the position or orientation of the vehicle by generating a target curvature which is then converted to a steering angle for one or more axles or other steering mechanisms of the vehicle based on a particular vehicle model. The target curvature or steering angle is then provided to an actuator or a steering interface of one or more of the axles to steer the vehicle.

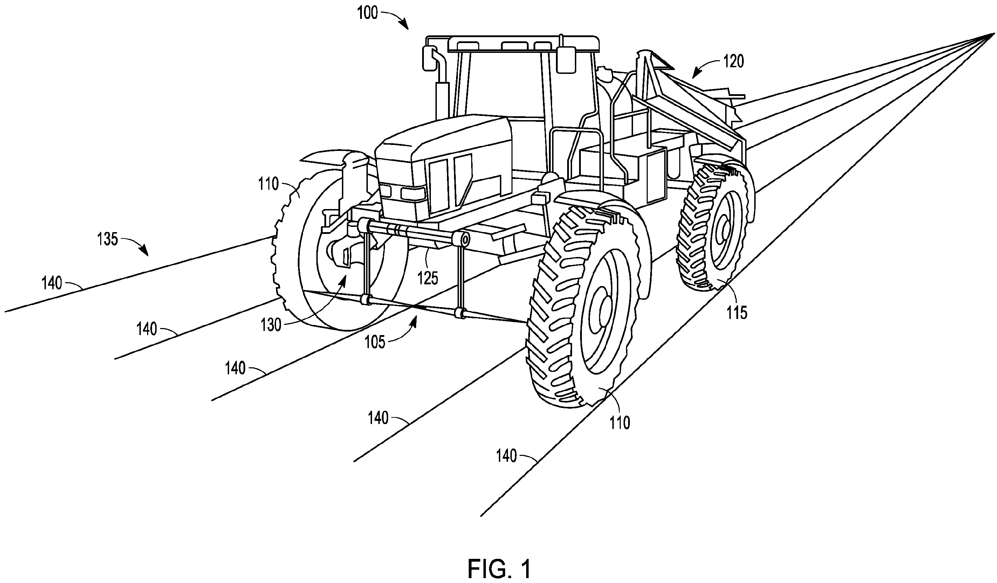

FIG. 1 is a view of an example of an agricultural vehicle 100 having a mechanical sensor 105. The agricultural vehicle 100 can include any vehicle or equipment that is configured to process a field, such as by planting, harvesting, or generally tending to a crop. Examples of such agricultural vehicles include tractors, planters, harvesters, irrigators, or fertilizers. As shown in FIG. 1, the agricultural vehicle 100 includes one or more ground engaging elements, such as front wheels 110 and rear wheels 115, and one or more agricultural implements, such as a sprayer boom. The ground engaging elements and the agricultural implements can each be coupled to the vehicle chassis 125 and may each be configured to actuate or articulate independently such chassis. In an example, the front wheels 110 are coupled to the chassis 125 though wheel assembly 130 and may be configured to articulate at one or more angles relative to the chassis. Similarly, the agricultural implement 120 can be coupled to the chassis 125 though an implement rack (not shown) and may be configured to independently extend, retract, fold, or rotate.

In some examples, the agricultural vehicle 100 includes a control module, such as a vehicle electronic controller unit (ECU) or other computing device, and one or more sensors, such as a visual sensor (e.g., a camera or other optical sensing device), a GPS sensor, and one or more angle or roll sensor. The visual sensor and the GPS sensor can each be coupled to the chassis 125 and configured to provide positional or navigation data that is usable by the control module to guide the agricultural vehicle 100 through the field 135. In an example, a GPS sensor can provide data that is indicative of the global position of the agricultural vehicle 100 in the field 135, while the visual sensors can provide more granular data that is useful for determining the position of the vehicle relative to crop rows 140.

Generally, the control module can use data provided by the aforementioned sensors to calculate the position of the agricultural vehicle 100, including, for example, calculating track-angle error and cross-track distances. However, as the crops that are disposed in crop rows 140 mature, foliage of these crops or other plants can create a canopy that obscures the field of view of visual sensors, thereby introducing errors or variances in the more granular position calculations of the control module. In these situations, additional sensors, such as mechanical sensors 105 can be used to provide data that is useful for determining the location of crop rows 140 or the vehicle position of the agricultural vehicle 100 relative to these crop rows. The mechanical sensors 105 can extend down from the chassis 125 below the crop canopy to determine the location of crop rows 140 by direct engagement with the crops. Such direct engagement, however, can damage the crops and cause mechanical wear on the sensors, which may reduce the useful life of the sensor.

### Control Console

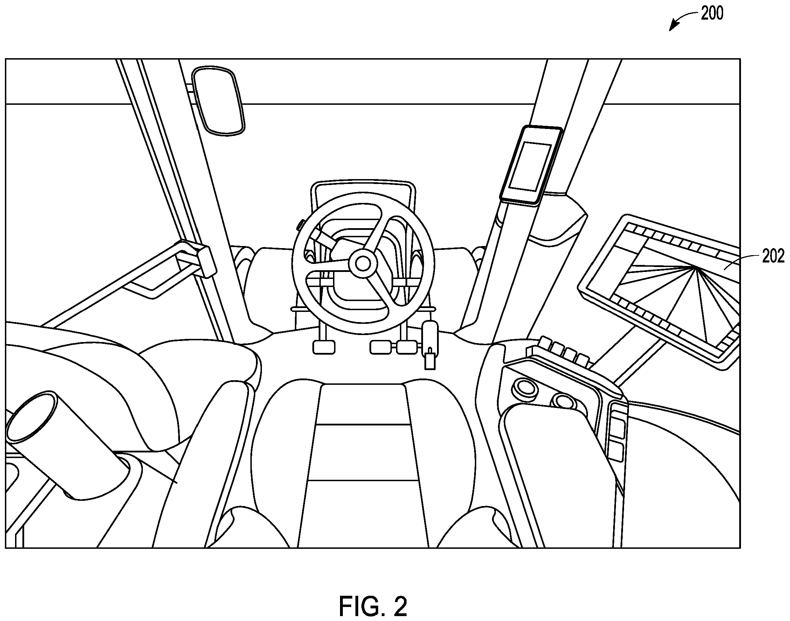

FIG. 2 is a diagram of an interior of a cab 200 of an agricultural machine or vehicle. Various embodiments of the present subject matter provide a control system configured for guiding an agricultural machine. The control system includes a control console 202 within the cab 200 of the agricultural machine, the control console including a display, one or more input elements, and a wireless communications interface. The control system also includes a wireless device configured to be carried or worn by a user of the agricultural machine. The wireless communications interface is configured to detect the wireless device within a predetermined distance of the agricultural machine, and configured to initiate a startup sequence of the control console upon detecting the wireless device within the predetermined distance.

In various embodiments, the wireless device includes one or more of a radio frequency (RF) communication device, a radio frequency identification (RFID) device, a Bluetooth device, or a Bluetooth Low Energy (LE) device. The wireless communications interface may be configured to send out a signal during a low power or sleep mode of the control console, and the signal is configured to be detected and responded to by the wireless device, in various embodiments. In some embodiments, the wireless device is configured to store a profile of a user, and wherein the profile is provided to the wireless communications interface. The profile includes a macro including startup instructions to the control console during the startup sequence, in some examples. In various examples, the startup sequence includes one or more of: turning on a door light of the agricultural machine, turning on a cab light of the agricultural machine, adjusting a seating position in the agricultural machine, programming the control console to a desired language, or starting an engine of the agricultural machine. The control console may identify the user based on the sensed wireless device, and turn on specific functions of the control console or other ECUs of the agricultural machine based on a subscription purchased by the user, in some embodiments. For example, a user may have a subscription that includes features such as real-time kinematics (RTK), variable rate application, green-on-green spraying, or the like. These features may be enabled or unlocked by the present system based on sensing the user's device (fob or badge), in various examples. In some embodiments, the control console is configured to enter a low power or sleep mode if the user is not detected within the cab of agricultural machine within a predetermined time period after the detecting of the wireless device.

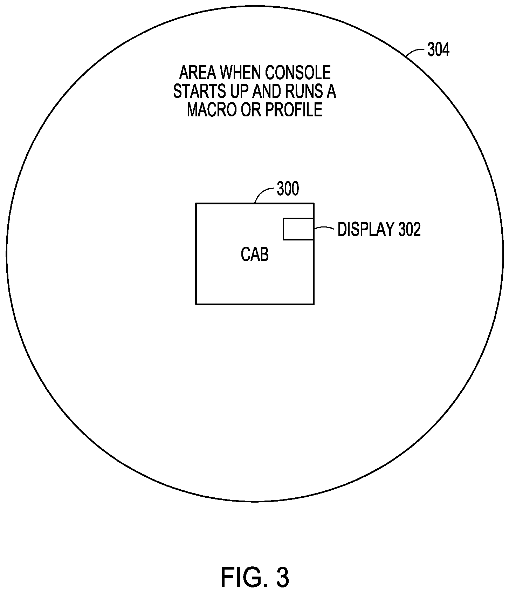

FIG. 3 is a schematic view of one example of a keyed control console for agricultural machines or vehicles. Various embodiments of the present subject matter provide a control system configured for guiding an agricultural machine. The control system includes a control console 302 within the cab 300 of the agricultural machine, the control console including a display, one or more input elements, and a wireless communications interface. The control system also includes a wireless device configured to be carried or worn by a user of the agricultural machine. The wireless communications interface is configured to detect the wireless device within a predetermined distance 304 of the agricultural machine or a predetermined distance from the cab, or other predetermined distance, and configured to initiate a startup sequence of the control console upon detecting the wireless device within the predetermined distance.

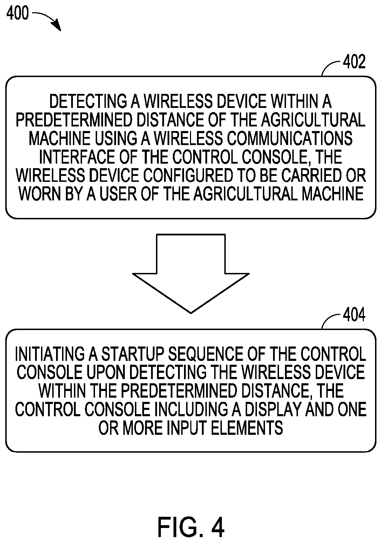

FIG. 4 illustrates a flow diagram of a method 400 of operating a control console for guiding an agricultural machine or vehicle, according to various examples of the present subject matter. The method 400 includes detecting a wireless device within a predetermined distance of the agricultural machine using a wireless communications interface of the control console, at step 402. The wireless device may be configured to be carried or worn by a user of the agricultural machine. At step 404, the method further includes initiating a startup sequence of the control console upon detecting the wireless device within the predetermined distance, the control console including a display and one or more input elements.

The method may further include entering a low power or sleep mode of the control console if the user is not detected within a cab of agricultural machine within a predetermined time period after the detecting of the wireless device, in some examples. In various examples, the method further includes sending a signal from the wireless communications interface during a low power or sleep mode of the control console, the signal configured to be detected and responded to by the wireless device. The wireless device may be configured to store a profile of a user, and the profile may be provided to the wireless communications interface, in some embodiments. The profile includes startup instructions to the control console during the startup sequence, in various embodiments. The wireless device may include a badge or a key fob, in some examples.

### Computational Machine

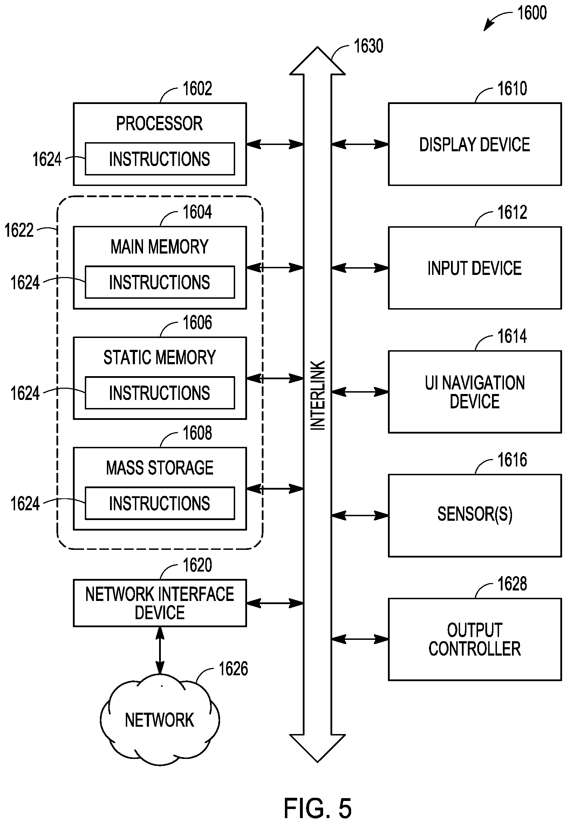

FIG. 5 illustrates a block diagram of an example machine 1600 upon which any one or more of the techniques (e.g., methodologies) discussed herein can perform. Examples, as described herein, can include, or can operate by, logic or a number of components, or mechanisms in the machine 1600. Circuitry (e.g., processing circuitry) is a collection of circuits implemented in tangible entities of the machine 1600 that include hardware (e.g., simple circuits, gates, logic, etc.). Circuitry membership can be flexible over time. Circuitries include members that can, alone or in combination, perform specified operations when operating. In an example, hardware of the circuitry can be immutably designed to carry out a specific operation (e.g., hardwired). In an example, the hardware of the circuitry can include variably connected physical components (e.g., execution units, transistors, simple circuits, etc.) including a machine readable medium physically modified (e.g., magnetically, electrically, moveable placement of invariant massed particles, etc.) to encode instructions of the specific operation. In connecting the physical components, the underlying electrical properties of a hardware constituent are changed, for example, from an insulator to a conductor or vice versa. The instructions enable embedded hardware (e.g., the execution units or a loading mechanism) to create members of the circuitry in hardware via the variable connections to carry out portions of the specific operation when in operation. Accordingly, in an example, the machine-readable medium elements are part of the circuitry or are communicatively coupled to the other components of the circuitry when the device is operating. In an example, any of the physical components can be used in more than one member of more than one circuitry. For example, under operation, execution units can be used in a first circuit of a first circuitry at one point in time and reused by a second circuit in the first circuitry, or by a third circuit in a second circuitry at a different time. Additional examples of these components with respect to the machine 1600 follow.

In alternative embodiments, the machine 1600 can operate as a standalone device or can be connected (e.g., networked) to other machines. In a networked deployment, the machine 1600 can operate in the capacity of a server machine, a client machine, or both in server-client network environments. In an example, the machine 1600 can act as a peer machine in peer-to-peer (P2P) (or other distributed) network environment. The machine 1600 can be a personal computer (PC), a tablet PC, a set-top box (STB), a personal digital assistant (PDA), a mobile telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

The machine (e.g., computer system) 1600 can include a hardware processor 1602 (e.g., a central processing unit (CPU), a graphics processing unit (GPU), a hardware processor core, or any combination thereof), a main memory 1604, a static memory (e.g., memory or storage for firmware, microcode, a basic-input-output (BIOS), unified extensible firmware interface (UEFI), etc.) 1606, and mass storage 1608 (e.g., hard drive, tape drive, flash storage, or other block devices) some or all of which can communicate with each other via an interlink (e.g., bus) 1630. The machine 1600 can further include a display unit 1610, an alphanumeric input device 1612 (e.g., a keyboard), and a user interface (UI) navigation device 1614 (e.g., a mouse). In an example, the display unit 1610, input device 1612 and UI navigation device 1614 can be a touch screen display. The machine 1600 can additionally include a storage device (e.g., drive unit) 1608, a network interface device 1620, and one or more sensors 1616, such as a global positioning system (GPS) sensor, compass, accelerometer, or other sensor. The machine 1600 can include an output controller 1628, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

Registers of the processor 1602, the main memory 1604, the static memory 1606, or the mass storage 1608 can be, or include, a machine readable medium 1622 on which is stored one or more sets of data structures or instructions 1624 (e.g., software) embodying or utilized by any one or more of the techniques or functions described herein. The instructions 1624 can also reside, completely or at least partially, within any of registers of the processor 1602, the main memory 1604, the static memory 1606, or the mass storage 1608 during execution thereof by the machine 1600. In an example, one or any combination of the hardware processor 1602, the main memory 1604, the static memory 1606, or the mass storage 1608 can constitute the machine readable media 1622. While the machine readable medium 1622 is illustrated as a single medium, the term "machine readable medium" can include a single medium or multiple media (e.g., a centralized or distributed database, and/or associated caches and servers) configured to store the one or more instructions 1624.

The term "machine readable medium" can include any medium that is capable of storing, encoding, or carrying instructions for execution by the machine 1600 and that cause the machine 1600 to perform any one or more of the techniques of the present disclosure, or that is capable of storing, encoding or carrying data structures used by or associated with such instructions. Non-limiting machine-readable medium examples can include solid-state memories, optical media, magnetic media, and signals (e.g., radio frequency signals, other photon-based signals, sound signals, etc.). In an example, a non-transitory machine-readable medium comprises a machine-readable medium with a plurality of particles having invariant (e.g., rest) mass, and thus are compositions of matter. Accordingly, non-transitory machine-readable media are machine readable media that do not include transitory propagating signals. Specific examples of non-transitory machine-readable media can include non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magnetooptical disks; and CD-ROM and DVD-ROM disks.

The instructions 1624 can be further transmitted or received over a communications network 1626 using a transmission medium via the network interface device 1620 utilizing any one of a number of transfer protocols (e.g., frame relay, internet protocol (IP), transmission control protocol (TCP), user datagram protocol (UDP), hypertext transfer protocol (HTTP), etc.). Example communication networks can include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi^{®}, IEEE 802.16 family of standards known as WiMAX^{®}), IEEE 802.15.4 family of standards, peer-to-peer (P2P) networks, among others. In an example, the network interface device 1620 can include one or more physical jacks (e.g., Ethernet, coaxial, or phone jacks) or one or more antennas to connect to the communications network 1626. In an example, the network interface device 1620 can include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding or carrying instructions for execution by the machine 1600, and includes digital or analog communications signals or other intangible medium to facilitate communication of such software. A transmission medium is a machine readable medium.

### Additional Notes & Examples

Example 1 is a control system configured for guiding an agricultural machine, the control system comprising: a control console within a cab of the agricultural machine, the control console including: a display; one or more input elements; and a wireless communications interface; and a wireless device configured to be carried or worn by a user of the agricultural machine, wherein the wireless communications interface is configured to detect the wireless device within a predetermined distance of the agricultural machine, and wherein the wireless communications interface is configured to initiate a startup sequence of the control console upon detecting the wireless device within the predetermined distance.

In Example 2, the subject matter of Example 1 optionally includes wherein the wireless device includes a radio frequency (RF) communication device.

In Example 3, the subject matter of Example 2 optionally includes wherein the wireless device includes a radio frequency identification (RFID) device.

In Example 4, the subject matter of any one or more of Examples 1-3 optionally includes wherein the wireless device includes a Bluetooth device.

In Example 5, the subject matter of Example 4 optionally includes wherein the wireless device includes a Bluetooth Low Energy (LE) device.

In Example 6, the subject matter of any one or more of Examples 1-5 optionally includes wherein the wireless communications interface is configured to send out a signal during a low power mode of the control console, the signal configured to be detected and responded to by the wireless device.

In Example 7, the subject matter of any one or more of Examples 1-6 optionally includes wherein the wireless device is configured to store a profile of a user, and wherein the profile is provided to the wireless communications interface.

In Example 8, the subject matter of Example 7 optionally includes wherein the profile includes startup instructions to the control console during the startup sequence.

In Example 9, the subject matter of Example 8 optionally includes wherein the startup sequence includes turning on a door light of the agricultural machine.

In Example 10, the subject matter of Example 8 optionally includes wherein the startup sequence includes turning on a cab light of the agricultural machine.

In Example 11, the subject matter of Example 8 optionally includes wherein the startup sequence includes adjusting a seating position in the agricultural machine.

In Example 12, the subject matter of Example 8 optionally includes wherein the startup sequence includes programming the control console to a desired language.

In Example 13, the subject matter of Example 8 optionally includes wherein the startup sequence includes starting an engine of the agricultural machine.

In Example 14, the subject matter of any one or more of Examples 1-13 optionally includes wherein the control console is configured to enter a low power mode if the user is not detected within the cab of agricultural machine within a predetermined time period after the detecting of the wireless device.

Example 15 is a method of operating a control console for guiding an agricultural machine, the method comprising: detecting a wireless device within a predetermined distance of the agricultural machine using a wireless communications interface of the control console, the wireless device configured to be carried or worn by a user of the agricultural machine; and initiating a startup sequence of the control console upon detecting the wireless device within the predetermined distance, the control console including a display and one or more input elements.

In Example 16, the subject matter of Example 15 optionally further includes entering a low power mode of the control console if the user is not detected within a cab of agricultural machine within a predetermined time period after the detecting of the wireless device.

In Example 17, the subject matter of any one or more of Examples 15-16 optionally further includes sending a signal from the wireless communications interface during a low power mode of the control console, the signal configured to be detected and responded to by the wireless device.

In Example 18, the subject matter of any one or more of Examples 15-17 optionally includes wherein the wireless device is configured to store a profile of a user, and wherein the profile is provided to the wireless communications interface.

In Example 19, the subject matter of Example 18 optionally includes wherein the profile includes startup instructions to the control console during the startup sequence.

In Example 20, the subject matter of any one or more of Examples 15-19 optionally includes wherein the wireless device includes a badge or a key fob.

Example 21 is at least one machine-readable medium including instructions that, when executed by processing circuitry, cause the processing circuitry to perform operations to implement of any of Examples 1-20.

Example 22 is an apparatus comprising means to implement of any of Examples 1-20.

Example 23 is a system to implement of any of Examples 1-20.

Example 24 is a method to implement of any of Examples 1-20.

Each of the non-limiting aspects or examples described herein may stand on its own or may be combined in various permutations or combinations with one or more of the other examples.

The above detailed description includes references to the accompanying drawings, which form a part of the detailed description. The drawings show, by way of illustration, specific embodiments that can be practiced. These embodiments are also referred to herein as "examples." Such examples can include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

All publications, patents, and patent documents referred to in this document are incorporated by reference herein in their entirety, as though individually incorporated by reference. In the event of inconsistent usages between this document and those documents so incorporated by reference, the usage in the incorporated reference(s) should be considered supplementary to that of this document; for irreconcilable inconsistencies, the usage in this document controls.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

The above description is intended to be illustrative, and not restrictive. For example, the above-described examples (or one or more aspects thereof) can be used in combination with each other. Other embodiments can be used, such as by one of ordinary skill in the art upon reviewing the above description. The Abstract is to allow the reader to quickly ascertain the nature of the technical disclosure and is submitted with the understanding that it will not be used to interpret or limit the scope or meaning of the claims. Also, in the above Detailed Description, various features can be grouped together to streamline the disclosure. This should not be interpreted as intending that an unclaimed disclosed feature is essential to any claim. Rather, inventive subject matter can lie in less than all features of a particular disclosed embodiment. Thus, the following claims are hereby incorporated into the Detailed Description, with each claim standing on its own as a separate embodiment. The scope of the embodiments should be determined with reference to the appended claims, along with the full scope of equivalents to which such claims are entitled.

## Claims

1. A control system configured for guiding an agricultural machine, the control system comprising:
a control console within a cab of the agricultural machine, the control console including:
a display;
one or more input elements; and
a wireless communications interface; and
a wireless device configured to be carried or worn by a user of the agricultural machine,
wherein the wireless communications interface is configured to detect the wireless device within a predetermined distance of the agricultural machine, and wherein the wireless communications interface is configured to initiate a startup sequence of the control console upon detecting the wireless device within the predetermined distance.

2. The control system of claim 1, wherein the wireless device includes a radio frequency (RF) communication device.

3. The control system of claim 2, wherein the wireless device includes a radio frequency identification (RFID) device.

4. The control system of any of the previous claims, wherein the wireless device includes a Bluetooth device, optionally an Bluetooth Low Energy, LE, device.

5. The control system of any of the previous claims, wherein the wireless communications interface is configured to send out a signal during a low power mode of the control console, the signal configured to be detected and responded to by the wireless device.

6. The control system of any of the previous claims, wherein the wireless device is configured to store a profile of a user, and wherein the profile is provided to the wireless communications interface.

7. The control system of claim 6, wherein the profile includes startup instructions to the control console during the startup sequence.

8. The control system of any of the previous claims, wherein the startup sequence includes at least one of the following:
- turning on a door light of the agricultural machine;
- turning on a cab light of the agricultural machine;
- adjusting a seating position in the agricultural machine;
- programming the control console to a desired language; and
- starting an engine of the agricultural machine.

9. The control system of any of the previous claims, wherein the control console is configured to enter a low power mode if the user is not detected within the cab of agricultural machine within a predetermined time period after the detecting of the wireless device.

10. A method of operating a control console for guiding an agricultural machine, the method comprising:
detecting a wireless device within a predetermined distance of the agricultural machine using a wireless communications interface of the control console, the wireless device configured to be carried or worn by a user of the agricultural machine; and
initiating a startup sequence of the control console upon detecting the wireless device within the predetermined distance, the control console including a display and one or more input elements.

11. The method of claim 10, further comprising:
entering a low power mode of the control console if the user is not detected within a cab of agricultural machine within a predetermined time period after the detecting of the wireless device.

12. The method of any of claims 10 and 11, further comprising:
sending a signal from the wireless communications interface during a low power mode of the control console, the signal configured to be detected and responded to by the wireless device.

13. The method of any of claims 10 to 12, wherein the wireless device is configured to store a profile of a user, and wherein the profile is provided to the wireless communications interface.

14. The method of claim 13, wherein the profile includes startup instructions to the control console during the startup sequence.

15. The method of any of claims 10 to 14, wherein the wireless device includes a badge or a key fob.
